# EUROPÄISCHE PATENTSCHRIFT

(11) **EP 3 371 653 B1**
(45) Veröffentlichungstag und Bekanntmachung des Hinweises auf die Patenterteilung: **17.07.2019**
(21) Anmeldenummer: 16820156.4
(22) Anmeldetag: 07.11.2016
(51) Int. Cl.: G03B 17/56

(54) **KAMERAHALTERUNG FÜR STEREOSKOPISCHE PANORAMAAUFNAHMEN**
CAMERA MOUNTING FOR STEREOSCOPIC PANORAMIC RECORDINGS
SUPPORT DE CAMÉRA POUR PRISES PANORAMIQUES STÉRÉOSCOPIQUES

(30) Priorität: 05.11.2015 DE 102015118997
(43) Veröffentlichungstag der Anmeldung: 12.09.2018
(73) Patentinhaber: Berliner KTA Shareholder GmbH, 13407 Berlin (DE)
(72) Erfinder: NIEWÖHNER, Dennis, Alexander, 33335 Gütersloh (DE)
(74) Vertreter: Pöhner, Wilfried Anton
(86) Internationale Anmeldenummer: PCT/DE2016/000387
(87) Internationale Veröffentlichungsnummer: WO 2017/076383

(56) Entgegenhaltungen:
- WO-A1-2015/085406
- US-A1- 2007 126 863
- US-A1- 2014 104 378
- US-A1- 2014 153 916

## Beschreibung

Die vorliegende Erfindung beschreibt eine Kamerahaltevorrichtung, umfassend ein mechanisch stabilisierendes Gerüst und eine Pluralität von Kamerabefestigungen, jede geeignet mindestens eine Kamera aufzunehmen, wobei die Kamerabefestigungen so um das Gerüst verteilt angebracht und orientiert sind, dass das Gesamtsichtfeld aller Kameras einen Vollkreis oder die ganze Sphäre umfasst und jeder Punkt des Gesamtsichtfeldes im Sichtfeld von mindestens zwei der Kameras liegt.

Die Photographie hat seit ihrer technischen Erfindung zu Beginn des 19. Jahrhunderts bis heute große Fortschritte gemacht. Immer empfindlichere photochemische Prozesse, die zunächst nur schwarz-weiß und später Farbaufnahmen erlaubten, wurden inzwischen weitgehende durch die digitale Photographie abgelöst, bei der die Bildinformation durch lichtempfindliche elektronische Sensoren, in der Regel sogenannte CCD Sensoren, erfasst wird. Die Abtastraten der heutzutage in Digitalkameras verwendeten CCD Sensoren ist dabei hoch genug, um mit jeder entsprechend programmierten Digitalkamera auch bewegte Bilder, also Videos aufnehmen zu können.

Eine beliebte Art von Fotos sind Weitwinkel- oder Panoramaaufnahmen. Häufig ist hier das Ziel, den größtmöglichen Winkelbereich abzudecken, also entweder einen Vollkreis, meist einen horizontalen, oder sogar eine Halb- oder die Vollkugel um den Standort eines Beobachters herum abzubilden. Dieses Ziel kann im Prinzip auf drei Arten erreicht werden.

Zum einen durch den Einsatz von Weitwinkel oder Fischaugenobjektiven. Mit letzteren sind Sichtkegelöffnungswinkel von bis zu 240Grad durchaus möglich. Sie haben aber den Nachteil, dass Bildverzerrungen auftreten, die umso größer sind, je weiter der Bildpunkt von der optischen Achse entfernt ist. Bei einem digital aufgenommenen Bild lassen sich solche Verzerrungen im Prinzip rechnerisch korrigieren, jedoch ist dies zum einen mit Rechenaufwand verbunden und zum anderen bleibt das Problem, dass die Bildpunktdichte und damit die die Schärfe des korrigierten Bildes für große Winkel von der optischen Achse niedriger ist als für kleine, also verschieden Bereiche des korrigierten Bildes verschieden scharf dargestellt werden.

Die anderen beiden Möglichkeiten lassen sich unter einem Prinzip vereinigen, nämlich dass das gesamte abzubildende Feld mit mehreren, üblicherweise überlappenden Teilbildern abgedeckt wird und die Teilbilder dann, bei digitalen Aufnahmen per Software, passend aneinander gefügt werden (engl. ,stitching'). Dieses Prinzip ist auf zwei Arten umsetzbar: die Aufnahmen können seriell, in der Regel mittels einer einzelnen Kamera, oder parallel erstellt werden.

Die serielle Variante hat den offensichtlichen Vorteil, dass nur eine einzige Kamera und keine gesonderte Kameraaufhängung benötigt werden, was Kosten und (physischen) Aufwand niedrig hält. Zum Beispiel verfügen die meisten modernen Fotohandys über eine Software, die es erlaubt fast in Echtzeit Panoramaaufnahmen zu erstellen, indem der Anwender das Sichtfeld der im Handy eingebauten Kamera über den abzubildenden Bereich wandern lässt. Jedoch ist üblicherweise nur ein lineares Abtasten vorgesehen, weswegen zwar ein horizontales 360 Grad (Zylinder-)Panorama, aber kein (semi-)sphärisches Panorama aufgenommen werden kann. Bei Landschaftsaufnahmen, bei denen die abzubildenden Objekte im Vergleich zur Brennweite des Objektivs sehr weit entfernt sind, ist es zur Aufnahme eines horizontalen Panoramas völlig ausreichend, wenn sich der Fotograph samt Kamera um die Hochachse dreht, wodurch die Kamera auf einem (Teil-)Kreis geschwenkt wird. Soll jedoch ein Panorama mit näherliegenden Objekten geschossen werden, so ist es für eine verzerrungsfreie Aufnahme angebracht, eine Kameraaufhängung zu verwenden, die ein parallaxenfreies Schwenken der Kamera ermöglicht. Eine solche Aufhängung wird zum Beispiel in der Offenlegungsschrift DE 10 2012 012 817 beschrieben.

Bei der parallelen Aufnahme eines Panoramas werden mehrere in unterschiedliche Richtungen blickende Kameras eingesetzt. Falls das Gesamtsichtfeld der Kameras den aufzunehmenden Bildbereich einschließt, ist ein einziger Aufnahmevorgang ausreichend, ansonsten muss die Parallelmethode mit der oben beschriebenen Seriellen kombiniert werden. Letzteres lässt sich in jedem Fall vermeiden, wenn genügend Kameras eingesetzt werden, um den gesamten sphärischen Raumwinkel abzudecken. In der Praxis ist man jedoch oft hauptsächlich daran interessiert, einen Vollkreis um den Betrachter/Fotographen herum abzubilden.

Um die von den einzelnen Kameras geschossenen Bilder korrekt zu einem einzelnen zusammenfügen zu können, ist es nötig die relative Position der Kameras beim Aufnahmezeitpunkt möglichst genau zu kennen. Darum und um von Aufnahme zu Aufnahme die gleiche Rechenmethode verwenden zu können, ist es sinnvoll, die Kameras alle zusammen in einer entsprechenden Haltevorrichtung zu fixieren, deren Abmessungen genau bekannt sind und welche der zum Zusammenfügen des Gesamtbildes verwendeten Software einprogrammiert sind. Mehrere Ausführungen für diese Methode benötigter Kamerahalterungen sind zum Beispiel in der Schrift WO 2014/071400 offenbart. Eine Haltevorrichtung ist natürlich auch aus anderen praktischen Gründen meist unabdingbar, z.B. um einen unkomplizierten Transport in einsatzfähigem Zustand zu ermöglichen, vielleicht sogar ohne Einsatz der Hände mittels einer Kopftragevorrichtung oder Ähnlichem.

Die parallele Methode zur Aufnahme von Panoramabildern hat den Nachteil relativ kostenaufwendig zu sein, da mehrere, aus praktischen Gründen sinnvollerweise alle gleichartige, Kameras und eine geeignete Haltevorrichtung benötigt werden. Jedoch besitzt sie den klaren Vorteil, dass die Aufnahmen schneller erfolgen. Das serielle Aufnehmen eines Vollkreispanoramas dauert bei dem üblicherweise nötigen, langsamen, gleichmäßigen Schwenken einer einzelnen Kamera mindestens ungefähr eine, oft mehrere Sekunden. Ist eine genügende Zahl in einer entsprechenden Vorrichtung fixierter Kameras vorhanden, dauert der gleiche Vorgang bei der parallelen Methode nur solange wie die für das Aufnehmen eines einzelnen Bildes benötigte Zeit, welche sich aus der Summe von Belichtungszeit und Auslesezeit sowie Totzeit des Bildsensors ergibt. Da letztere im Millisekundenbereich liegen, ist es bei entsprechenden Lichtverhältnissen damit möglich, Videoaufnahmen von 360Grad Panoramen oder sogar des vollen sphärischen Raumwinkels zu erstellen.

Eine weitere Steigerung in Richtung einer lebensechteren Betrachtung lässt sich mit stereoskopischen Aufnahmen, auch 3D-Aufnahmen genannt, erreichen. Bei diesen wird die gleiche Szene aus mindestens zwei verschiedenen Blickwinkeln abgebildet, so dass bei der Betrachtung jedem Auge ein entsprechendes Bild präsentiert werden kann. Die einfachste Realisierung ist, mittels zweier in dieselbe Richtung blickende, horizontal beabstandete Kameras, wobei die Aufnahme der linken Kamera dem linken Auge und entsprechend die der Rechten dem rechten Auge gezeigt wird. Je nach Abstand der beiden Kameras, auch Stereobasis genannt, ergibt sich ein normaler stereoskopischer Seheindruck in einem anderen Entfernungsbereich. Entspricht der Abstand zw. den Kameras z.B. dem normalen Augenabstand, d.h. einige Zentimeter, so ergibt sich auch ein dem üblichen Seheindruck entsprechender 3D Eindruck, bei dem Objekte mit bis zu ca. 10m Entfernung vom Betrachter noch eine merkliche Parallaxe aufweisen, so dass das Gehirn in der Lage ist Tiefen- bzw. Entfernungsinformation zu gewinnen. Wird jedoch eine größere Stereobasis von einigen 10cm, 1m oder mehr verwendet, erweitert sich diese Grenze von ca. 10m auf 50m, 100m oder mehr. Umgekehrt ist es bei großer Stereobasis schwierig, sehr nahe Objekte zu betrachten, da eine für den Menschen ungewohnt große Parallaxe auftritt, so dass das Gehirn die beiden Teilbilder nicht mehr zu einem einzelnen stereoskopischen Gesamtbild zu vereinen vermag, was sich durch Doppelsehen oder einen verzerrten Seheindruck äußert und bei fortgesetzter Betrachtung, besonders bei bewegten Bildern, zu Schwindel oder Übelkeit führen kann.

Das Erstellen von stereoskopischen 360Grad Panoramaaufnahmen stellt eine Herausforderung dar, die erst in jüngster Zeit angegangen werden konnte. Insbesondere bietet die Firma Google die Jump Assembler Bildbearbeitungssoftware in Verbindung mit einem kreisförmigen Kameraträger mit 16 Kameras an, mittels derer sich dieses Ziel realisieren lässt. Da die Kameras jedoch auf den Ecken eines regelmäßigen Hexadecagons angeordnet sind und auch in die entsprechende Radialrichtung zeigen, also alle einen Winkel von (ganzzahligen Vielfachen von) 22,5 Grad zueinander haben, ergibt sich zwar eine recht gleichmäßige Abdeckung, doch ist das Zusammenfügen des Gesamtbildes extrem rechenaufwendig, insbesondere bei den Verwendeten Auflösungen.

Des Weiteren ist bei der Firma Samsung ein unter dem Projektnahmen ,Beyond' bekanntes stereoskopisches 360 Grad Aufnahmesystem in der Entwicklung, welches sich besonderes durch seine kleine und kompakte Bauform auszeichnen soll. Bei diesem werden ebenfalls 16 Kameras verwendet, jedoch in der Form von 8 paarig angeordneten Kameras mit sich überschneidendem Sichtfeld. Durch die Anordnung und Ausrichtung vermindert sich der zum zusammenfügen nötige Rechenaufwand erheblich, jedoch ergeben sich die Nachteile einer weniger gleichmäßigen Abdeckung des abzubildenden Raumwinkelbereichs und damit zusammenhängend ein stärker blickrichtungsabhängiger Stereoeindruck.

Die US-Veröffentlichungsschrift US 2014 /09153916 A1 beschreibt Kamerahaltevorrichtungen zum Halten einer Mehrzahl von Kameras in vorgegebenen Blickrichtungen und umfasst mehrere Kamerabefestigungen, die von einem Gerüst gehalten werden. Verschiedene Ausführungen und Anordnung werden offenbart, denen jedoch gemein ist, dass die Kamerabefestigungen am Ende von Tragarmen sitzen, die sternförmig von einer zentralen Nabe ausgehen. Hierdurch ist der Innenraum des durch die Kamerabefestigungen aufgespannten Vielecks- bzw. Polyeders nahezu vollständig belegt und steht nicht für eine andere Verwendung zur Verfügung.

Den oben beschriebenen Systemen ist gemein, dass sie es durch ihre Bauform nicht erlauben, mit einer Kopftragevorrichtung oder einer Vorrichtung zur Befestigung so kombiniert zu werden, dass der Träger, ob Mensch oder z.B. ein Modellhubschrauber oder ähnliches, nicht mit im Gesamtsichtfeld liegt.

Die vorliegende Erfindung stellt sich vor diesem Hintergrund daher die Aufgabe, eine Vorrichtung zu finden, die es erlaubt stereoskopische Panoramaaufnahmen, insbesondere von 360 Grad Panoramen, anzufertigen und dabei mit einer Kopftragevorrichtung oder einer Vorrichtung zur Befestigung an einem kleinen, unbemannten Trägerfahr- oder -flugzeug kombinierbar ist.

Gelöst wird diese Aufgabe erfindungsgemäß durch eine Kamerahaltevorrichtung mit den in Anspruch 1 angegebenen Merkmalen.

Ein mechanisch stabiles Gerüst trägt eine Mehrzahl von Kamerabefestigungen, die so angeordnet und gerichtet sind, dass das Gesamtsichtfeld aller Kameras einen gewünschten Raumwinkel, insbesondere einen Vollkreis, abdeckt und jede Richtung im Gesichtsfeld von mindestens zwei Kameras liegt und das Gerüst im Inneren hohl ist und Platz zur Aufnahme eines Trägers, insbesondere eines menschlichen Kopfes oder von in etwa kopfgroßen Fahr- oder Flugzeugen bietet. Ausformungen des Gerüstes sind von ungefähr ring-, torus-, polygonring-, schalen- oder polyederschalenförmiger Gestalt.

Durch die erfindungsgemäße Vorrichtung lassen sich in einem 360Grad Vollkreis stereoskopische Aufnahmen anfertigen, bei denen alle Einzelbilder gleichzeitig geschossen werden, wodurch außer Standbildern auch Videoaufnahmen möglich sind. Dadurch, dass das Gerüst innen hohl als ein kreisförmiger oder vieleckiger Ring oder Torus, oder auch als Schale bzw. Polyederförmige Schale ausgeführt ist, lässt sich die hier beschriebene Kamerahaltevorrichtung leicht mit einer Kopftragevorrichtung kombinieren oder an einem kleinen Fahr- oder Fluggerät so befestigen, dass der Träger außerhalb des Gesamtsichtfeldes liegt und dies unabhängig davon, wie groß dieses ist, also welchen Raumwinkel es umfasst.

Wird eine Kopftragevorrichtung eingesetzt, können dabei die Hände frei bleiben. Dies eröffnet neue Möglichkeiten der Immersion des Betrachters in das Geschehen, ob bei gesellschaftlichen Ereignissen wie Festen oder Feiern, bei Sportveranstaltungen oder bei Action-Aufnahmen wie Bungeesprüngen, Mountainbikeabfahrten, Gleitschirmflügen und dergleichen oder auch bei Naturaufnahmen von Korallenriffen, Vogelschwärmen und so weiter.

Es bietet sich die Möglichkeit, dass jeder Betrachter sozusagen sein eigener Kameramann werden kann, indem Blickrichtung und Zoomstufe selbst ausgewählt werden können. Die Position der Kamera ist dabei das einzige, was fest vorgegeben ist.

Durch die erfindungsgemäße Vorrichtung wird es weiterhin möglich, selbst erlebte Geschehnisse und Begebenheiten aus völlig neuem Blickwinkel zu sehen und zum Beispiel herauszufinden, was währenddessen hinter dem eigenen Rücken vor sich ging. Damit gehen solche Panoramavideos über den Zweck der reinen Erinnerungsauffrischung hinaus und lassen ein neues Betrachtungserlebnis zu.

Da jede Richtung des Gesamtsichtfeldes mindestens doppelt, d.h. von zwei verschiedenen Kameras abgedeckt wird, lassen sich alle Aufnahmen auch in lebensechter, stereoskopischer Form betrachten, was den Realismus und die erreichte Immersion noch verstärkt.

Der wesentliche Vorteil der erfindungsgemäßen Kamerahaltevorrichtung ist jedoch, dass die besondere Bauform als hohler Ring- oder schalenförmigem Gerüst ein Tragen auf dem Kopf oder mittels kleiner autonomer bzw. ferngesteuerter Fahr- oder insbesondere Flugzeuge ermöglicht, ohne dass der Träger selbst im Gesichtsfeld der Kameras und damit im Bildbereich auftaucht. Damit lässt sich nicht nur, wie mit anderen Panoramakamerahaltevorrichtungen, ein Vollkreis oder die Vollsphäre abzüglich eines häufig als störend empfundenen, den Träger oder das Trägersystem zeigenden Ausschnittes abdecken, sondern dies ist tatsächlich vollständig ungestört möglich.

Wird die Videoinformation mit einer durch einen zusätzlichen Sensor, z.B. einen GPS Empfänger gewonnenen Ortsinformation verknüpft, kann mithilfe der erfindungsgemäßen Kamerahaltevorrichtung auch die virtuelle Erkundung einer Umgebung (a la Google Street View) mit bisher unerreichter Detailgenauigkeit und in einem unerreichten Umfang ermöglicht werden.

Die Überwachung einer Umgebung ohne toten Winkel in Echtzeit ist auch für Sicherheitsanwendungen ziviler und militärischer Art interessant, z.B. für Sicherheitspersonal oder Kundschafter auf Aufklärungsmissionen.

Auch in Fällen, in denen die erfindungsgemäße Kamerahaltevorrichtung nicht die wesentliche oder Hauptnutzlast eines Trägersystems darstellt, ist sie sinnvoll einsetzbar. Als Sicherheitsausrüstung für unbemannte Fluggeräte ist sie zum Beispiel in Verbindung mit einer Bildauswertung in Echtzeit sinnvoll zur Kollisionsvermeidung einsetzbar. Durch die gewährleistete Rundumsicht kann ein sich aus beliebiger Richtung näherndes Flugobjekt erfasst, anhand der Parallaxen die Entfernung bestimmt und gegebenenfalls ein Ausweichmanöver eingeleitet werden.

Im Folgenden sollen vorteilhafte Weiterbildungen, die im Einzelnen oder in Kombination realisierbar sind, vorgestellt werden.

Der Aufwand für die Bildbearbeitung bzw. zum Zusammenfügen der Teilbilder reduziert sich wesentlich, wenn die Kameras bzw. die Kamerabefestigungen in Paaren angeordnet sind, d.h. immer zwei Kameras mit einem gewissen festen Abstand zueinander in dieselbe Richtung schauen. Dies lässt sich vorteilhafterweise am unkompliziertesten Realisieren, wenn die Kamerabefestigungen auf den Ecken eines gleichseitigen Vielecks oder eines Polyeders angeordnet sind. Durch diese regelmäßige, paarige Anordnung ist die durchzuführende Bildanpassung für alle benachbarten Seiten gleich.

Im Inneren der erfindungsgemäßen Kamerahaltevorrichtung sind vorteilhafterweise Dämpfungselemente vorhanden, die die Vorrichtung und dadurch die von ihr getragenen Kameras gegen Erschütterungen des Trägers stabilisieren, und somit eine bessere Bildqualität ermöglicht wird. Diese Dämpfung kann in Form von Kissen, z.B. aus Schaumstoff oder mechanischen oder hydraulischen Stoßdämpfern vorliegen. Besonders wenn mittels der erfindungsgemäßen Vorrichtung Videos aus der Bewegung heraus, etwa beim Laufen oder aus dem Flug, aufgenommen werden sollen, ist eine ausreichende Bildstabilisierung für ein angenehmes Betrachtungserlebnis unerlässlich, wobei besonders die hohen Frequenzen unterdrückt werden sollten.

Über die Dämpfungselemente mit dem Gerüst verbunden befinden sich im Inneren der erfindungsgemäßen Kamerahaltevorrichtung des Weiteren Vorrichtungen zur Befestigung an einem Trägersystem. Dies kann eine Kopftragevorrichtung umfassend ein Kopf-Kinn Gurtsystem ähnlich dem eines Fahrradhelms sein, oder Schnüre, Klammern, Schraubklemmen oder Klemmringe zur Befestigung der Kamerahaltevorrichtung an einem kleinen, unbemannten Fahr- oder Flugzeug. Sind letztere entsprechend vorbereitet, so können die Dämpfungselemente oder andere Verbindungsstücke auch direkt an diesen befestigt, z.B. verschraubt, werden. In jedem Fall würde der Träger in etwa im Zentrum des ring oder schalenförmigen Gerüsts positioniert und lösbar mit der Kamerahaltevorrichtung befestigt.

Sinnvollerweise ist das Gerüst so konstruiert und optimiert, etwa dadurch, dass Verstärkungsrippen angebracht oder eingearbeitet sind, so dass bei einem gegebenen, möglichst geringen Gewicht, eine hohe Steifigkeit gegenüber Verwindung und Verdrehung erreicht wird. Diese Verformungen verschieben nämlich die Kamerapositionen gegeneinander und sind somit einer guten Bildqualität abträglich.

Es empfiehlt sich, die erfindungsgemäße Vorrichtung aus mehreren Modulen aufzubauen. Eine besonders bevorzugte Ausführungsform setzt sich z.B. zusammen aus Kamerabefestigungsmodulen, diese verbindende Zwischenstücke verschiedener Art und gegebenenfalls zusätzliche T-Stücke, mit denen sich von einem ringförmigen Hauptgerüst ausgehend weitere Halbringe- oder auch anders geformte modulare Segmente mit weiteren Kamera- oder anderen Befestigungen anfügen lassen. Es ist in der Praxis besonders hilfreich, wenn diese Module werkzeuglos zusammengefügt werden können, insbesondere durch Zusammenstecken. Sind die Kamerabefestigungen ebenfalls zur werkzeuglosen Kamerabefestigung vorgesehen, z.B. indem sie als schalenförmige Aufnahmen ausgeführt sind, in die Kameras eingeschoben und durch Reibungsschluss fixiert werden, ergibt sich ein vollständig ohne Zusatzwerkzeug verwendbares System. Alternativ können die Kamerabefestigungen auch so ausgeführt sein, dass sie eine darin befestigte Kamera dreiachsig verspannen, z.B. mittels einer flexiblen Klemmlippe.

Ein modulares System erlaubt auch auf einfache Art und Weise eine Größenanpassung der erfindungsgemäßen Vorrichtung, sowohl was den Innendurchmesser des Gerüstes als auch was die Stereobasis angeht. Soll ersteres unabhängig von letzterem vergrößert werden oder umgekehrt, so verwendet man andere Befestigungsmodule, kann oder soll beides zugleich vergrößert/verändert werden, so ist es ausreichend, neue Zwischenstücke einzufügen. Es ist auch denkbar durch verschiedene Steck- oder Einrastepositionen variable Größen mit nur einem einzigen Modulesatz zu realisieren.

Die erfindungsgemäße Kamerahaltevorrichtung weist weiterhin bevorzugt eine Lagestabilisierungseinrichtung auf, um beim Filmen während des Laufens, der Fahrt oder sonstigen Fortbewegung die Drehungen, Verkippungen und Richtungsänderungen des Trägerfahrzeugs bzw. der tragenden Person nicht auf die Kameras und damit auf die Aufnahmen zu übertragen. Zusätzlich dient dies zur weiter verbesserten Stabilisierung gegen Verwackeln.

Eine besonders bevorzugte Lagestabilisierungseinrichtung ist eine passive eingelenkige Kardanaufhängung umfassend eine Kugel, welche reibungsarm und frei um drei Achsen drehbar in einer Schale oder Pfanne gelagert ist, welche einen mit der Durchmesser der Kugel vergleichbaren, leicht größeren, lichten Innendurchmesser aufweist. Die Kugel kann von den Schalenwänden umgriffen werden und so gegen Herausheben oder -springen gesichert sein. Mit der Kugel fest verbunden ist ein Schaft, der durch ein Loch in der Schale/Pfanne hindurchgreift, welches so dimensioniert ist, das die Kugel mit Schaft einen zumindest ausreichenden Drehbereich abdeckt. Was in diesem Zusammenhang ausreichend bedeutet, ergibt sich aus dem Anwendungsfall. Soll die erfindungsgemäße Kamerahaltevorrichtung beispielsweise unter einem Fluggerät getragen werden, so sollten die maximal zu erwartende Quer- und Nickneigungswinkel während des Fluges durch die Aufhängung ausgeglichen werden können, so dass die Kamerahaltevorrichtung immer weitestgehend plan und parallel zur Erdoberfläche gehalten wird.
Der Schaft ist wiederum über Tragarme oder andere Verbindungsmittel mit dem Gerüst der Kamerahaltevorrichtung verbunden. Er dient dem Zweck, den Massenschwerpunkt der Kamerahaltevorrichtung unterhalb des Kugelgelenks zu positionieren, so dass die Lagestabilisierung passiv erfolgt, indem diese aufgrund der frei Drehbaren Gelenkkugel den Schaft immer parallel zu dem auf die Kamerahaltevorrichtung wirkenden Kraftvektor hält. Dieser Kraftvektor setzt sich zusammen aus einer Schwerkraftkomponente und einer dynamischen Komponente aufgrund der Beschleunigungen des Trägers. Es ist daher einsichtig, das letzere möglichst gering zu halten sind, wenn auf die beschriebene Art und Weise eine gute Stabilisierung mit Ausrichtung parallel zu den Äquipotentialflächen der Gravitationsgraft gewünscht ist.

Die beschriebene eingelenkige Aufhängung sorgt für Stabilisierung um die Quer- und Nickachse. Eine weitgehende Stabilisierung um die Hochachse ergibt sich im Idealfall einer möglichst reibungsfrei gelagerten Kugel, die ja relativ zur Pfanne auch um die Hochachse drehbar gelagert ist, ebenfalls aufgrund des Trägheitsmoments der erfindungsgemäßen Kamerahaltevorrichtung samt Kameras. Zusätzlich könnte beispielsweise der Schaft ein reibungsarmes Drehgelenk enthalten. Es ist auch denkbar, im Schaft einen Schrittmotor oder anderen fein regelbaren Elektromotor zu integrieren, der eine aktive Nachführung bzw. Stabilsierung um die Hochachse ermöglicht.

Alternativ kann zur effektiven Lagestabilsierung auch bei größeren Beschleunigungen der Trägerplattform die Lagestabilisierungseinrichtung zwei Kugelgelenke umfassen, welche durch einen Schaft verbunden sind. Das obere Gelenk würde hierbei wie oben beschrieben den relativen Winkel zur Trägerplattform ausgleichen. Das zweite Gelenk wäre aber bevorzugt im Massenschwerpunkt der Kamerahalterung positioniert, so dass sich der über den verbindenden Schaft übertragene Kraftvektor kein verkippendes Moment auf die Kamerahaltevorrichtung ausüben kann.

Falls zusätzlich zur weiterhin im Wesentlichen passiven Lagestabilisierung eine umfassende aktive Nachkorrekturmöglichkeit gewünscht ist, können in die Schale bzw. Pfanne auch aktive Antriebselements zum Rotieren der Kugel um alle drei Achsen vorgesehen sein. Beispielsweise ist es möglich Elektromotoren mit kleinen, an der Kugel angreifenden Rädern vorzusehen. Bevorzugt wären drei Elektromotoren, d.h. für jede Achse einer, in die Schale integriert.

Die bisher beschriebene Ausführungsform sieht nur Kamerabefestigungen unterhalb des Kugelgelenkes vor, weswegen es damit sehr schwierig ist, die Vollkugel abzubilden, da außer bei Verwendung einer Kamerahltevorrichtung die um einiges größer ist als das Trägervehikel, letzteres immer im Sichtfeld ist. Um dies zu vermeiden, schlägt vorliegende Erfindung in einer besonders bevorzugten Weiterbildung der erfindungsgemäßen Kamerahaltevorrichtung mit Lagestabilisierungseinrichtung in Form eines Kugelgelenkes vor, an der Kugel zusätzlich zu dem ersten, nach unten weisenden Schaft noch weitere anzubringen. Es ist mindestens ein Weiterer Schaft vorzusehen, der bevorzugt dem ersten diametral gegenüber auf der Kugel befestigt ist und wie dieser radial nach außen steht. Am kugelabgewandten Ende dieses Schaftes wäre in zum ersten Schaft vergleichbarer Weise ein weiteres Gerüst mit Kamerabefestigungen haltende Tragarme angebracht.
Diese erfindungsgemäße Ausführungsform besteht demnach aus bevorzugt zwei Teilen oder, falls in beiden die gleiche Zahl gleichartiger Kameras zum Einsatz kommt, Hälften, eine erste, unterhalb des Kugelgelenkes angeordnete, welche den unteren und eine zweite, oberhalb des Kugelgelenkes angeordnete, welche den oberen Halbraum abdeckt.
Damit der Schwerpunkt der Kamerahaltevorrichtung als Ganzes weiterhin unterhalb des Kugelgelenkes zu liegen kommt, was für die passive Schwerkraftstabilisierung wichtig ist, kann der untere Schaft länger als der obere sein oder der untere Teil ist schwerer als der obere oder eine Kombination aus beidem. Bei der bevorzugten Ausgestaltung, dass oberer und unterer Teil gleichartig, d.h. im Wesentlichen spiegelsymmetrisch zueinander sind, und insbesondere die gleiche Anzahl an Kameras aufweisen, ist es auch möglich, das Gewicht der unteren Hälfte durch Zusatzgewichte zu steigern. Dadurch ist es auch möglich, gleich lange Schäfte zu verwenden, also obere und untere Hälfte geometrisch tatsächlich spiegelsymmetrisch zu wählen. Dies hat zur Folge, dass trotz der gleichen Ausrichtung der Kameras beider Hälften der Drehpunkt des sphärischen Bildes mit dem physischen Drehpunkt der Lagestabilisierungsvorrichtung zusammenfällt. Dies ist bevorzugt, da durch die möglichst hohe Symmetrie in der Anordnung und Ausrichtung der Kameras zum einen das Zusammensetzen der Teilbilder zu einem sphärischen, stereoskopischen Gesamtbild rechnerisch deutlich vereinfacht wird und, damit zusammenhängend, auch trotz Lagestabilsierungsvorrichtung noch auftretende Restbewegungen mit weniger Rechenaufwand korrigiert werden können.

Weiterhin bevorzugt ist eine Ausgestaltung des Gerüstes der erfindungsgemäßen Kamerahaltevorrichtung, bei der dieses zumindest in Teilen eine sternförmige Struktur aufweist. Bei dieser gehen von einer zentralen Nabe Tragarme, um Material zu sparen radial, nach außen und an den Außenenden dieser Tragarme sind Kamerabefestigungen einzeln, paarweise oder auch in größere Gruppen eingeteilt angebracht. Die Kamerabefestigungen würden hierbei nur durch den sie haltenden Tragarm abgestützt und wären mit den Befestigungen anderer Tragarme nicht verbunden. Dies bietet den Vorteil, dass eine solchermaßen sternförmig gestaltete erfindungsgemäße Kamerahaltevorrichtung, wenn sie aus Modulen zusammengesetzt werden soll, mit weniger Steckverbindungen auskommt und darum deutlich schneller montierbar ist. Ein Modul bestünde dabei bevorzugt aus einem Tragarm mit einem daran befestigten Paar von Kamerabefestigungen.
Soll diese Ausführungsform mit der zuvor beschriebenen Lagestabilisierungseinrichtung kombiniert werden, so können beispielsweise oberer und/oder unterer, jeweils mindestens einen Halbraum abdeckender Teil, in eben beschriebener, sternförmiger Weise konstruiert sein.

Eine weitere bevorzugte Ausführungsform sieht vor, die Kameras der Stereopaare möglichst unmittelbar nebeneinander zu positionieren um eine möglichst kompakte und platzsparende Anordnung zu erreichen. Besonders bevorzugt werden je zwei solcher nebeneinander angeordneter Stereopaare Rücken-an-Rücken zusammengesetzt und somit ein Modul aus vier Halterungen in einer Ebene gebildet, wobei die Kamerapaare in entgegengesetzte Richtungen blicken. Setzt man zwei solcher Module mit um 90Grad verdrehten Blickrichtungen aufeinander erhält man eine kompakte, in etwa würfelförmige Kamerahaltevorrichtung, welche mit Kameras, die jeweils einen Öffnungswinkel von mehr als 90 Grad aufweisen, den ganzen Vollkreis abdecken kann. Um ein Zusammenfügen oder Stitchen der Einzelbilder per Software zu ermöglichen, ist eine gewisse Überlappung des Sichtfeldes nötig, weshalb der Kameraöffnungswinkel echt größer als 90 Grad sein muss, bevorzugt sind 110 Grad oder mehr.
Neben der Kompaktheit ist der Vorteil der beschriebenen würfelförmigen Anordnung ein möglichst kleiner toter Bereich oder toter Winkel, d.h. sowohl der von keiner Kamera als auch der von keinem Kamerapaar abgedeckte Bereich sind minimal und bei einem gegebenen Abstand entstehen größere kontinuierliche Bereiche, die von zwei Kamerapaaren abgedeckt sind, was das Zusammenfügen der Bilder erleichtert. Somit eignet sich die vorgestellte würfelförmige erfindungsgemäße Kamerahaltevorrichtung besonders für stereoskopische Panoramaaufnahmen mit vielen relativ nahe am Betrachter gelegenen Objekten.

Um den Vollkreis zur Sphäre zu vervollständigen können einzelne oder auch paarweise nebeneinander angeordnete Kamerabefestigungen an Ober- oder Unterseite der erfindungsgemäßen würfelförmigen Kamerahaltevorrichtung vorgesehen sein. Des Weiteren ist es sinnvoll, Befestigungsmittel zur Befestigung an einer Trageeinrichtung oder Aufhängung vorzusehen, beispielsweise in Form von Haltestegen. Als Ort empfehlen sich die Außenseiten der Kamerabefestigungen, da die Befestigungsmittel dort im Totbereich der Gesamtheit der Kameras liegen.

Weitere Merkmale, Eigenschaften und Vorteile ergeben sich aus der im Folgenden unter Bezugnahme auf die Abbildungen näher erläuterten bevorzugten Ausführungsformen der erfindungsgemäßen Kamerahaltevorrichtung. Dies dient nur der Illustration und soll die vorliegende Erfindung in keiner Weise einschränken.

Es folgt eine kurze Beschreibung der Abbildungen. Es zeigen
- Figur 1:: Eine perspektivische Obersicht einer bevorzugten Ausführung der erfindungsgemäßen Kamerahaltevorrichtung
- Figur 2:: Eine perspektivische Draufsicht auf die Kamerahaltevorrichtung aus Figur 1.
- Figur 3:: perspektivische Draufsicht auf drei Typen von Modulen aus welchen die erfindungsgemäße Kamerahaltevorrichtung aus Figur 1 zusammengesetzt ist
- Figur 4:: perspektivische Ansicht einer erfindungsgemäßen Kamerahaltevorrichtung mit Lagestabilisierungseinrichtung
- Figur 5:: perspektivische Ansicht einer würfelförmigen Ausführungsform der erfindungsgemäßen Kamerahaltevorrichtung
- Figur 6:: perspektivische Ansicht einer zweiteiligen, lagestabilisierten Kamerahaltevorrichtung zur Abdeckung der Vollsphäre

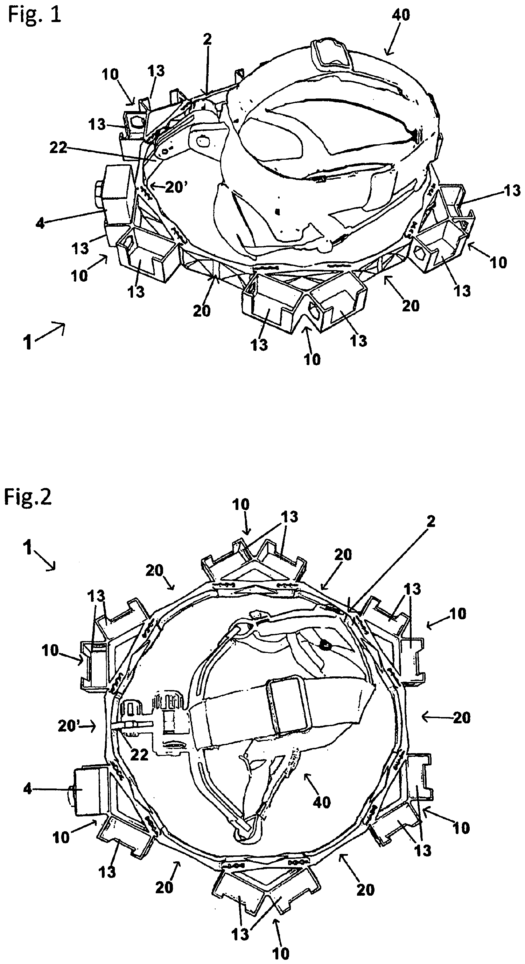

In Figur 1 ist in perspektivischer Ansicht eine bevorzugte Ausführungsform der erfindungsgemäßen Kamerahaltevorrichtung 1 mitsamt einer Kopftragevorrichtung zu sehen. Ausgehend von einem gleichseitigen Sechseck mit einem Kamerapaar pro Seite bildet das Gerüst 2 hier in etwa ein gleichseitiges Zwölfeck mit einer Seitenlänge von ungefähr 7cm. Die Vorrichtung besteht aus drei verschiedenen Arten von Modulen, die alle im 3D Druckverfahren aus einem festen Kunststoff gefertigt sind: sechs Kamerabefestigungsmodule 10 mit dem Grundriss eines gleichschenkligen, stumpfwinkligen Dreiecks mit größtem Winkel 120 Grad, wobei die beiden kurzen Seiten 11 durch die Rückseite 12 von den zwei als hohlen, quaderförmigen Schalen ausgeführten Kamerabefestigungen 13 mit eingesteckten Kameras 4 gebildet ist. An jedem Ende der Kamerabefestigungsmodule 10 sind Schlitze oder Nuten 14 eingebracht, in die die Federn 21 von etwa 7cm langen, 2.5-3cm hohen Zwischenstücken 20 eingesteckt werden. Die Federn 21 schließen mit dem Rest des Zwischenstücks 20 einen Winkel von 150Grad ein, wodurch insgesamt aus je sechs Befestigungsmodulen 10 und Zwischenstücken 20 ein (annähernd) gleichseitiges Zwölfeck aufgebaut wird. Eine besondere Ausführung der Zwischenstücke 20', in Figur 1 an der Stirnseite zu sehen, verfügt über einen gewinkelt nach oben führenden Steg 22, der dazu dient, die Verbindung mit anderen Befestigungs- oder Dämpfungsmitteln herzustellen, in diesem Fall einer Kopftragevorrichtung 40.

Der Querschnitt der einzelnen Module ist darauf optimiert, bei möglichst geringem Materialeinsatz eine große statische wie dynamische Verwindungs- und Verbiegesteifigkeit zu erreichen. Dies ist nötig, um durch Erschütterungen verursachte Verformungen und damit einhergehende Verschiebungen der Kamerapositionen gegeneinander so klein wie möglich zu halten. Eine hohe Steifigkeit bewirkt weiterhin eine Verschiebung der mechanischen Eigenschwingungsfrequenz zu höheren Werten, wodurch sich die Schwingungsamplitude reduziert. Die hohe Steifigkeit wurde hier durch Einbeziehen von Verstärkungsrippen in weitestgehend als Hohlkörper ausgeführte Segmente erreicht. Dies nutzt in vorteilhafterweise die Formungsmöglichkeiten und Freiheiten aus, die sich durch den 3D Druck bieten.

Figur 2 zeigt die Kamerahaltevorrichtung 1 aus Figur 1 in perspektivischer Ansicht direkt von oben. Deutlich zu erkennen sind die zwölfeckige Form des Gerüsts 2 und die Befestigung der Module über ineinandergesteckte Federn 21 und Nuten 14. Ein an einer Stirnseite angebrachtes spezielles Zwischenstück 20' verfügt über einen nach oben abgehenden Steg 22, an dem in diesem Beispiel eine Kopftragevorrichtung 40 bestehend aus Stirnplatte sowie Scheitel-, Schläfen- und Wangengurten mit Kinnschale angeschlossen ist.
Es ist auch denkbar, mehr als ein spezielles Zwischenstück einzusetzen um eine verringerte Schwingungsanfälligkeit zu erreichen.
So ließe sich zum Beispiel mit drei 120Grad versetzten Anschlussstücken, die mittels mechanischer oder hydraulischer Dämpfer mit einem Träger- oder einer Tragevorrichtung verbunden sind auf einfache Weise eine dreiachsige Schwingungsdämpfung verwirklichen.

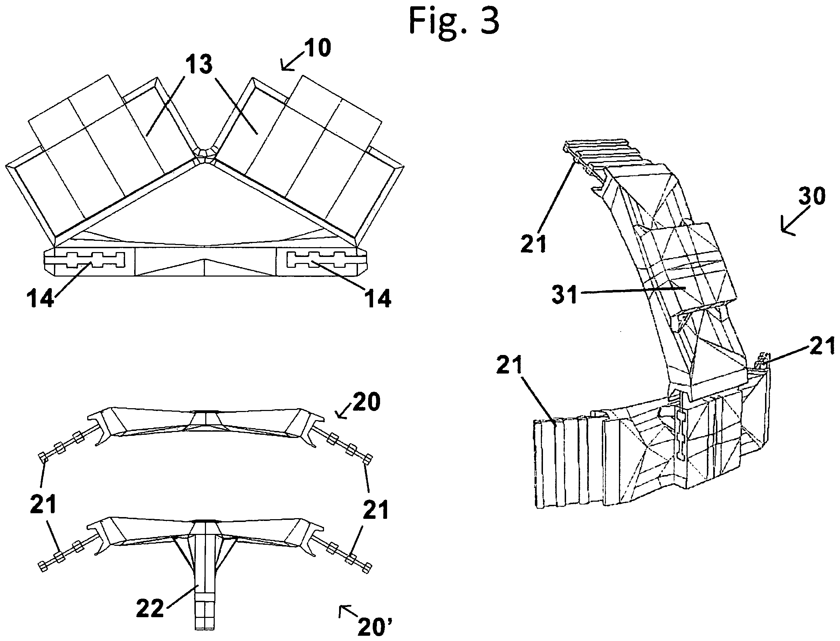

In Figur 3 sind in perspektivischer Draufsicht vier verschiedene in der erfindungsgemäßen, modular aufgebauten Kamerahaltervorrichtung 1 verwendete Module abgebildet. Dies sind zum einen die schon oben be-

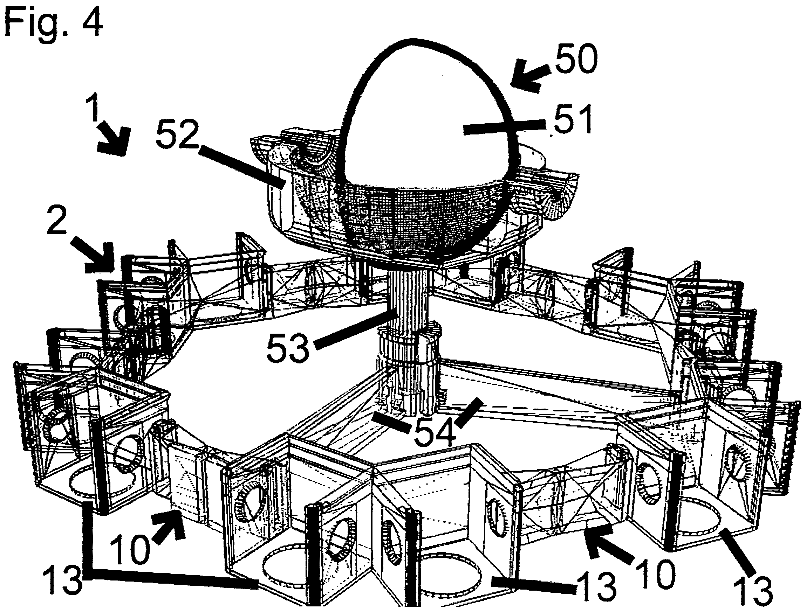

- Figur 4:: perspektivische Ansicht einer erfindungsgemäßen Kamerahaltevorrichtung mit Lagestabilisierungseinrichtung

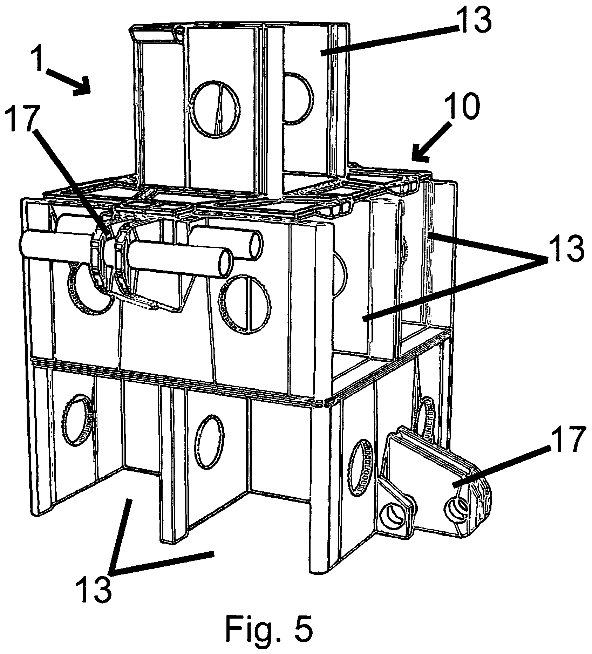

- Figur 5:: perspektivische Ansicht einer würfelförmigen Ausführungsform der erfindungsgemäßen Kamerahaltevorrichtung

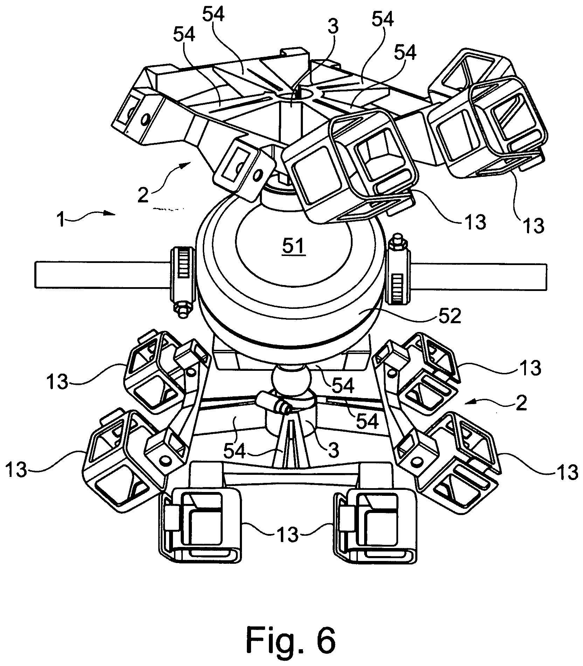

- Figur 6:: perspektivische Ansicht einer zweiteiligen, lagestabilisierten Kamerahaltevorrichtung zur Abdeckung der Vollsphäre

In Figur 1 ist in perspektivischer Ansicht eine bevorzugte Ausführungsform der erfindungsgemäßen Kamerahaltevorrichtung 1 mitsamt einer Kopftragevorrichtung zu sehen. Ausgehend von einem gleichseitigen Sechseck mit einem Kamerapaar pro Seite bildet das Gerüst 2 hier in etwa ein gleichseitiges Zwölfeck mit einer Seitenlänge von ungefähr 7cm. Die Vorrichtung besteht aus drei verschiedenen Arten von Modulen, die alle im 3D Druckverfahren aus einem festen Kunststoff gefertigt sind: sechs Kamerabefestigungsmodule 10 mit dem Grundriss eines gleichschenkligen, stumpfwinkligen Dreiecks mit größtem Winkel 120 Grad, wobei die beiden kurzen Seiten durch die Rückseite von den zwei als hohlen, quaderförmigen Schalen ausgeführten Kamerabefestigungen 13 mit eingesteckten Kameras 4 gebildet ist. An jedem Ende der Kamerabefestigungsmodule 10 sind Schlitze oder Nuten 14 eingebracht, in die die Federn 21 von etwa 7cm langen, 2.5-3cm hohen Zwischenstücken 20 eingesteckt werden. Die Federn 21 schließen mit dem Rest des Zwischenstücks 20 einen Winkel von 150Grad ein, wodurch insgesamt aus je sechs Befestigungsmodulen 10 und Zwischenstücken 20 ein (annähernd) gleichseitiges Zwölfeck aufgebaut wird. Eine besondere Ausführung der Zwischenstücke 20', in Figur 1 an der Stirnseite zu sehen, verfügt über einen gewinkelt nach oben führenden Steg 22, der dazu dient, die Verbindung mit anderen Befestigungs- oder Dämpfungsmitteln herzustellen, in diesem Fall einer Kopftragevorrichtung 40.

Öffnungswinkel von 90 Grad oder mehr aufweisen, der gesamte Vollkreis mit einem aufgrund der Kompakten Anordnung minimierten toten Winkel abgedeckt wird. Auf der Oberseite ist eine weitere Kamerabefestigung 13 mit Blickrichtung nach oben angebracht, um den Vollkreis zu einer Semisphäre zu erweitern. Wenn eine vollständig stereoskopische Aufnahme der Semisphäre gewünscht ist, könnte eine weitere Kamerabefestigung 13 auf der Oberseite ergänzt werden. Bei jeder Ebene sind ferner an den Außenseiten der Kamerabefestigung Befestigungsmittel 17 in Form von Haltestegen zur Befestigung der erfindungsgemäßen Würfelförmigen Kamerahaltevorrichtung an einer Trageeinrichtung oder Aufhängung angebracht.

Figur 6 zeigt eine perspektivische Ansicht einer Ausführungsform einer mittels Kugelgelenk lagestabilisierten erfindungsgemäßen Kamerahaltevorrichtung, ähnlich der in Figur 4 gezeigten. Zusätzlich zu dem einen, radial nach unten weisenden Schaft 53 ist jedoch noch ein an der Kugel 51 diametral entgegengesetzt angebrachter, radial nach oben weisender Schaft 53' vorhanden. Weiterhin ist das Gerüst 2 nicht ringförmig- sondern sternförmig aus von einer Nabe 3 aus radial nach außen weisenden Tragarmen 54 aufgebaut, an deren äußeren Enden Kamerabefestigungen 13 paarweise so gehalten sind, das der Blickwinkel der darin eingesetzten Kameras mit der Polrichtung des abgedeckten Halbraumes, welche hier mit der Achse des Schaftes 53 zusammenfällt, einen Winkel kleiner als ca. 45-50 Grad bildet, was dem halben Öffnungswinkel üblicherweise verwendeter Kameras entspricht. Dadurch ist erreicht, dass die Polrichtung im Blickfeld aller Kameras liegt und somit eine zusätzliche, nach oben zeigende Kamera bzw. Kamerapaar nicht benötigt wird. An dem nach oben weisenden Schaft 53' ist eine gleichartige sternförmige Haltevorrichtung mit Gerüst 2, vier Tragarmen 54 und einer Nabe 3 angebracht, welche allerdings gegenüber der unteren gespiegelt und um 45 Grad verdreht ist.

### Bezugszeichenliste

- 1: Kamerahaltevorrichtung
- 2: Gerüst
- 3: Nabe
- 4: Kamera
- 10: Kamerabefestigungsmodul
- 13: Kamerabefestigung
- 14: Nut
- 17: Haltesteg
- 20: Zwischenstück
- 20': Zwischenstück mit Steg
- 21: Feder
- 22: gewinkelter Steg
- 30: T-Stück
- 31: Segment
- 32: Stirnseite T-Stück
- 40: Kopftragevorrichtung
- 50: Lagestabilisierungseinrichtung
- 51: Gelenkkugel
- 52: Gelenkpfanne
- 53: Schaft
- 54: Tragarm

## Patentansprüche

1. Kamerahaltevorrichtung (1) umfassend
- ein Gerüst (2) zum Tragen
- einer Pluralität Kamerabefestigungen (13), jede geeignet mindestens eine Kamera (4) aufzunehmen und festzuhalten, wobei die Kamerabefestigungen so um das Gerüst (2) verteilt angebracht und orientiert sind, dass das Gesamtsichtfeld aller Kameras (4) größer ist als das Sichtfeld einer einzelnen Kamera (4) und wobei jeder Punkt des Gesamtsichtfeldes im Sichtfeld von mindestens zwei der Kameras (4) liegt,
**dadurch gekennzeichnet, dass**
das Gerüst (2)
- in etwa ring-, torus- oder schalenförmig ist, oder die Form eines hohlen Vielecks, insbesondere eines gleichseitigen Vielecks, oder eines hohlen Polyeders hat, und
- im Inneren über einen Hohlraum zur Aufnahme des Kopfs einer die Vorrichtung tragenden Person oder eines kleinen in etwa kopfgroßen Fahr- oder Flugzeuges verfügt.

2. Kamerahaltevorrichtung nach Anspruch 1, **dadurch gekennzeichnet, dass** das Gesamtsichtfeld der Kameras (4) einen Vollkreis oder die ganze Sphäre umfasst.

3. Kamerahaltevorrichtung nach Anspruch 1 oder 2, **dadurch gekennzeichnet, dass** die Kamerabefestigungen (3) gepaart angeordnet und so orientiert sind, dass immer jeweils 2 Kameras im Wesentlichen das gleiche Sichtfeld aufweisen.

4. Kamerahaltevorrichtung nach einem der vorhergehenden Ansprüche, **dadurch gekennzeichnet, dass** alle Paare von Kamerabefestigungen (3) im selben Abstand zueinander angebracht sind.

5. Kamerahaltevorrichtung nach einem der vorhergehenden Ansprüche, **dadurch gekennzeichnet, dass** die Kamerabefestigungen auf den Ecken eines Vielecks, insbesondere eines gleichseitigen Vielecks, oder eines Polyeders liegen.

6. Kamerahaltevorrichtung nach einem der vorhergehenden Ansprüche, **dadurch gekennzeichnet, dass** im Inneren des Gerüsts (2)
- mit diesem mechanisch verbundene Dämpfungselemente vorhanden sind,
- eine Kopftragevorrichtung vorhanden ist, die mit diesem ggf. über das oder die Dämpfungselemente verbunden ist.

7. Kamerahaltevorrichtung nach einem der vorhergehenden Ansprüche, **dadurch gekennzeichnet, dass** die Kamerahaltevorrichtung (1)
- zur Befestigung an einem unbemannten Kleinfahr- oder - fluggerät vorbereitet, und/oder
- aus Modulen zusammengesetzt ist, welche bevorzugt werkzeuglos verbindbar, insbesondere zusammensteckbar, sind.

8. Kamerahaltevorrichtung nach einem der vorhergehenden Ansprüche, **dadurch gekennzeichnet, dass** das Gerüst (2)
- durch Verstärkungsrippen auf Verwindungs- und Verbiegesteifigkeit hin optimiert, und/oder
- in einem Innendurchmesser verstellbar ist.

9. Kamerahaltevorrichtung nach einem der vorhergehenden Ansprüche, **dadurch gekennzeichnet, dass** die Abstände der Kameras, insbesondere der Kamerapaare, zueinander verstellbar sind.

10. Kamerahaltevorrichtung nach einem der vorhergehenden Ansprüche, **dadurch gekennzeichnet, dass** die Befestigung der Kameras in den Kamerabefestigungen (13) werkzeuglos erfolgt, wobei die Kameras (4) in den Kamerabefestigungen (13) durch Reibungsschluss und/oder dreiachsig verspannt gehalten sind.

11. Kamerahaltevorrichtung nach einem der vorhergehenden Ansprüche, **dadurch gekennzeichnet, dass** Halterungen für Zubehör wie Lampen, Mikrofone oder Bewegungssensoren vorhanden sind.

12. Kamerahaltevorrichtung nach einem der vorhergehenden Ansprüche, **dadurch gekennzeichnet, dass** eine Lagestabilisierungseinrichtung (50) vorhanden ist.

13. Kamerahaltevorrichtung nach Anspruch 13, **dadurch gekennzeichnet, dass** die Lagestabilisierungseinrichtung (50) eine passive Lagestabilisierung ist, welches ein Kugelgelenk mit einer in einer gelochten Schale (52) reibungsarm drehbar gelagerte Kugel (51) umfasst, wobei die Kugel (51) über einen durch das Loch der Schale (52) geführten Schaft (53) und Tragearme (54) mit dem Gerüst (2) der Kamerahaltevorrichtung (1) verbunden ist.

14. Kamerahaltevorrichtung nach Anspruch 14, **dadurch gekennzeichnet, dass** ein zweites Kugelgelenk vorhanden ist, welches im Massenschwerpunkt der Kamerahaltevorrichtung (1) positioniert ist, wobei der Schaft (53) die beiden Kugelgelenke verbindet und die Tragarme (54) am zweiten Kugelgelenk angreifen.

15. Kamerahaltevorrichtung nach einem der Ansprüche 14 oder 15, **dadurch gekennzeichnet, dass** mindestens ein weiterer Schaft (53') vorhanden ist, welcher bevorzugt dem ersten Schaft (53) diametral gegenüber an der Kugel (51) befestigt ist.

16. Kamerahaltevorrichtung nach Anspruch 16, **dadurch gekennzeichnet, dass** am kugelabgewandten Ende des Schaftes (53') weitere über Tragarme (54') mit dem Schaft verbundene Kamerahalterungen vorhanden sind.

17. Kamerahaltevorrichtung nach einem der vorhergehenden Ansprüche, **dadurch gekennzeichnet, dass** das Gerüst (2) zumindest teilweise eine sternförmige Struktur aufweist, bei der die Kamerabefestigungen (13) einzeln, paarweise oder in größeren Gruppen nur durch von einer zentralen Nabe (3) ausgehenden Tragarmen (54) gehalten sind.

18. Kamerahaltevorrichtung nach einem der vorhergehenden Ansprüche, **dadurch gekennzeichnet, dass** das Gesamtsichtfeld eines Teils der Kameras (4) eine Halbkugel umfasst, wobei für jede Kamera (4) dieses Teils der Kameras (4) ein Winkel zwischen Polachse der Halbkugel und der Blickrichtung der Kamera (4) kleiner ist als der halbe Öffnungswinkel der Kamera (4).

19. Kamerahaltevorrichtung nach einem der vorhergehenden Ansprüche, **dadurch gekennzeichnet, dass** die Kamerabefestigungen (13) unmittelbar nebeneinander angeordnet sind.

20. Kamerahaltevorrichtung nach einem der vorhergehenden Ansprüche, **dadurch gekennzeichnet, dass** sie eine würfelförmige Anordnung aus acht Kamerabefestigungen (13) umfasst, wobei die Kamerabefestigungen paarweise nebeneinander angordnet sind und zwei solcher Paare Rücken-an-Rücken gelegt eine Ebene der würfelförmigen Anordnung bilden und diese insgesamt zwei Ebenen umfasst, wobei die Blickrichtungen der Kameras der beiden Ebenen um 90 Grad versetzt sind.

21. Kamerahaltevorrichtung nach Anspruch 19, **dadurch gekennzeichnet, dass** sie
- an den Außenseiten der Kamerabefestigungen (13) Verbindungsstege (17), und/oder
- weitere Kamerabefestigungen (13) an einer Ober- und/oder Unterseite aufweist.

## Claims

1. Camera-mounting apparatus (1) comprising
- a frame (2) for supporting
- a plurality of camera fastenings (13), each of which is suitable for receiving and fixing at least one camera (4), the camera fastenings being attached distributed around the frame (2) and oriented such that the overall field of view of all cameras (4) is larger than the field of view of an individual camera (4) and each point of the overall visual field lying within the visual field of at least two of the cameras (4),
**characterised in that**
the frame (2)
- is approximately ring-shaped, toroidal or bowl-shaped, or has the form of a hollow polygon, in particular an equilateral polygon, or a hollow polyhedron, and
- in the interior has a cavity for receiving the head of a person wearing the apparatus or a small approximately head-sized vehicle or aircraft.

2. Camera-mounting apparatus according to Claim 1, **characterized in that** the total field of view of the cameras (4) comprises a full circle or the entire sphere.

3. Camera-mounting apparatus according Claim 1 or 2, **characterized in that** the camera fasteners (3) are arranged in pairs and are oriented such that in each case two cameras always have substantially the same field of view

4. Camera-mounting apparatus according to any one of the preceding claims, **characterized in that** all pairs of camera fastenings (3) are mounted at the same distance from each other.

5. Camera-mounting apparatus according to any one of the preceding claims, **characterized in that** the camera fastenings are located on the corners of a polygon, particularly an equilateral polygon, or a polyhedron.

6. Camera-mounting apparatus according to any one of the preceding claims, **characterized in that** in the interior of the frame (2) there are provided
- damping elements that are mechanically connected thereto,
- a head-mounted carrying device, which is connected thereto optionally via one or more damping elements.

7. Camera-mounting apparatus according to any one of the preceding claims, **characterized in that** the camera-mounting apparatus (1)
- is prepared for fastening on an unmanned small vehicle or aircraft, and/or
- is assembled from modules that can preferably be joined without tools, in particular plugged together.

8. Camera-mounting apparatus according to any one of the preceding claims, **characterized in that** the frame (2)
- is optimized with reinforcing ribs for torsional and flexural stiffness, and/or
- is adjustable in an inner diameter.

9. Camera-mounting apparatus according to any one of the preceding claims, **characterized in that** the distances of the cameras, in particular of the camera pairs, are adjustable with respect to each other.

10. Camera-mounting apparatus according to any one of the preceding claims, **characterized in that** the fastening of the cameras in the camera fastenings (13) is carried out without tools, the cameras (4) being held by friction and/or by being triaxially braced in the camera fastenings (13)..

11. Camera-mounting apparatus according to any one of the preceding claims, **characterized in that** holders for accessories such as lights, microphones or motion sensors are provided.

12. Camera-mounting apparatus according to any one of the preceding claims, **characterized in that** a position-stabilization means (50) is present.

13. Camera-mounting apparatus according to claim 12, **characterised in that** said position stabilization means (50) is a passive position stabilization, which comprises a ball joint with a ball (51) which is rotatably mounted with low friction in a perforated cavity (52), said ball (51) being connected, via a shank (53), which is guided through the hole of the cavity (52), and connected to the frame (2) of the camera-mounting apparatus (1) by means of support arms (54).

14. Camera-mounting apparatus according to claim 13 , **characterized in that** a second ball joint is present which is positioned in the centre of gravity of the camera holding apparatus (1), wherein the shank (53) connects the two ball joints and the support arms (54) engage on the second ball joint.

15. Camera-mounting apparatus according to claim 14, **characterized in that** at least one further shank (53') is present, which is preferably fastened on the ball (51), diametrically opposite to the first shank (53).

16. Camera-mounting apparatus according to one of claims 14 or 15, **characterized in that**, at the end remote from the ball of the shank (53'), further camera mounts are provided, which are connected to the shank via support arms (54').

17. Camera-mounting apparatus according to any one of the preceding claims, **characterized in that** the frame (2), at least partially, has a star-shaped structure in which the camera attachments (13) are held singly, in pairs or in larger groups only by means of support arms (54) emanating from a central hub (3).

18. Camera-mounting apparatus according to any one of the preceding claims, **characterized in that** the total field of view of a part of the cameras (4) comprises a hemisphere, wherein, for each camera (4) of this part of the cameras (4), an angle between the polar axis of the hemisphere and the direction of view of the camera (4) is less than half the aperture angle of the camera (4).

19. Camera-mounting apparatus according to any one of the preceding claims, **characterized in that** the camera fastenings (13) are arranged directly next to one another.

20. Camera-mounting apparatus according to any one of the preceding claims, **characterized in that** it comprises a cube-shaped arrangement comprising eight camera fastenings (13), wherein the camera fastenings are arranged in pairs next to each other and two such pairs, when laid back-to-back, form a plane of the cube-shaped arrangement, comprising a total of two planes, the viewing directions of the cameras of the two planes being offset by 90 degrees.

21. Camera-mounting apparatus according to claim 19, **characterised in that** it comprises,
- on the outer sides of the camera fastenings (13), connecting webs (17), and / or
- further camera fastenings (13) on an upper and / or a lower side.

## Revendications

1. Dispositif de support de caméra (1) comprenant
- une armature (2) destinée à porter
- un ensemble de fixations de caméras (13), dont chacune est capable de réceptionner et de tenir au moins une caméra (4), sachant que les fixations de caméras sont placées réparties et orientées autour de l'armature (2) de manière à ce que le champ de vision total de toutes les caméras (4) soit plus grand que le champ de vision de chaque caméra individuelle (4) et sachant que chaque point du champ de vision total se situe dans le champ de vision d'au moins deux des caméras (4),
**caractérisé par le fait que**
l'armature (2)
- possède à peu près une forme d'anneau, de tore ou de coque, ou la forme d'un polygone creux, notamment d'un polygone équilatéral, ou d'un polyèdre creux, et
- dispose à l'intérieur d'un espace creux destiné à réceptionner la tête d'une personne portant le dispositif ou d'un petit véhicule ou d'un petit avion ayant à peu près la grosseur d'une tête.

2. Dispositif de support de caméra selon la revendication 1, **caractérisé par le fait que** le champ de vision total des caméras (4) englobe un cercle complet ou toute la sphère.

3. Dispositif de support de caméra selon la revendication 1 ou 2, **caractérisé par le fait que** les fixations de caméras (3) sont disposées par paires et sont orientées de façon à ce que 2 caméras présentent toujours à chaque fois essentiellement le même champ de vision.

4. Dispositif de support de caméra selon une des revendications précédentes, **caractérisé par le fait que** toutes les paires de fixations de caméras (3) sont disposées à la même distance l'une de l'autre.

5. Dispositif de support de caméra selon une des revendications précédentes, **caractérisé par le fait que** les fixations de caméras reposent sur les coins d'un polygone, notamment d'un polygone équilatéral, ou d'un polyèdre.

6. Dispositif de support de caméra selon une des revendications précédentes, **caractérisé par le fait qu'à** l'intérieur de l'armature (2)
- se trouvent des éléments d'amortissement reliés mécaniquement à cette dernière,
- se trouve un système porte-tête relié à cette dernière, le cas échéant par l'intermédiaire du ou des éléments d'amortissement.

7. Dispositif de support de caméra selon une des revendications précédentes, **caractérisé par le fait que** le dispositif de support de caméra (1)
- est préparé pour être fixé sur un petit véhicule ou un petit avion sans conducteur, et/ou
- est constitué de modules pouvant être reliés de préférence sans outils, notamment peuvent être enfichés ensemble.

8. Dispositif de support de caméra selon une des revendications précédentes, **caractérisé par le fait que** l'armature (2)
- est optimisée au niveau de sa résistance à la torsion et à la flexion à l'aide de nervures de renforcement, et/ou
- peut être ajustée dans un diamètre interne.

9. Dispositif de support de caméra selon une des revendications précédentes, **caractérisé par le fait que** les distances des caméras, notamment des paires de caméras entre elles peuvent être ajustées.

10. Dispositif de support de caméra selon une des revendications précédentes, **caractérisé par le fait que** la fixation des caméras dans les fixations de caméras (13) a lieu sans outil, sachant que les caméras (4) sont maintenues serrées dans les fixations de caméras (13) par friction et/ou par trois axes.

11. Dispositif de support de caméra selon une des revendications précédentes, **caractérisé par le fait que** des supports sont prévus pour des accessoires tels que des lampes, des microphones ou des détecteurs de mouvement.

12. Dispositif de support de caméra selon une des revendications précédentes, **caractérisé par** la présence d'un dispositif de stabilisation de position (50).

13. Dispositif de support de caméra selon la revendication 13, **caractérisé par le fait que** le dispositif de stabilisation de position (50) est une stabilisation de position passive comprenant une rotule muni d'une bille (51) amortie de façon rotative avec peu de friction dans une coque percée de trous (52), sachant que la bille (51) est reliée à l'armature (2) du dispositif de support de caméra (1) par l'intermédiaire d'une tige (53) guidée à travers le trou de la coque (52) et des bras porteurs (54).

14. Dispositif de support de caméra selon la revendication 14, **caractérisé par** la présence d'une deuxième rotule, qui est positionnée dans le centre de gravité massique du dispositif de support de caméra (1), sachant que la tige (53) relie les deux rotules et que les bras porteurs (54) s'accrochent sur la deuxième.

15. Dispositif de support de caméra selon une des revendications 14 ou 15, **caractérisé par** la présence d'au moins une autre tige (53'), qui est de préférence fixée sur la bille (51), diamétralement opposée à la première tige (53).

16. Dispositif de support de caméra selon la revendication 16, **caractérisé par** la présence d'autres supports de caméras reliés à l'extrémité de la tige (53') opposée à la bille par l'intermédiaire de bras porteurs (54').

17. Dispositif de support de caméra selon une des revendications précédentes, **caractérisé par le fait que** l'armature (2) présente au moins en partie une structure en forme d'étoile dans laquelle les fixations de caméras (13) sont seulement tenues individuellement, par paires ou en groupes plus importants par des bras porteurs (54) partant d'un moyeu central (3).

18. Dispositif de support de caméra selon une des revendications précédentes, **caractérisé par le fait que** le champ de vision total d'une partie des caméras (4) comprend une demi-sphère, sachant que pour chaque caméra (4) de cette partie des caméras (4), un angle entre l'axe polaire de la demi-sphère et le sens de visualisation de la caméra (4) est plus petit que le demi-angle d'ouverture de la caméra (4).

19. Dispositif de support de caméra selon une des revendications précédentes, **caractérisé par le fait que** les fixations de caméras (13) sont disposées directement les unes à côté des autres.

20. Dispositif de support de caméra selon une des revendications précédentes, **caractérisé par le fait** d'englober une disposition en forme de dé composée de huit fixations de caméras (13), sachant que les fixations de caméras sont disposées par paires les unes à côté des autres et que deux paires de ce type placées dos à dos forment un plan de la disposition en forme de dé en constituant ensemble deux plans, sachant que les sens de visualisation des caméras des deux plans sont décalés de 90 degrés.

21. Dispositif de support de caméra selon la revendication 19, **caractérisé par le fait** de présenter
- des montants de liaison (17) sur les côtés extérieurs des fixations de caméras (13), et/ou
- d'autres fixations de caméras (13) sur la face supérieure et/ou inférieure.
